# EUROPEAN PATENT APPLICATION

(11) **EP 1 400 962 A1**
(43) Date of publication of application: **24.03.2004**
(21) Application number: 03255850.4
(22) Date of filing: 18.09.2003
(51) Int. Cl.: G11B 7/09

(54) **Optical pickup apparatus**

(30) Priority: 20.09.2002 JP 2002274741
(71) Applicant: Pioneer Corporation, Meguro-ku, Tokyo (JP)
(72) Inventor: Matsuda, Takehiro, Tsurugashima-shi Saitama (JP)
(74) Representative: Haley, Stephen

(57) **Abstract**

An optical pickup apparatus includes an object lens opposed to a disk, a fixing section, and a bobbin suspended by the fixing section and four or more longitudinal elastic members for supporting the object lens. A plurality of coil pairs symmetric with respect to a point (180 degrees), the centroid of the object lens placement face of the bobbin exist and are placed in a different surface.

## Description

The present disclosure relates to the subject matter contained in Japanese Patent Application No. 2002-274741 filed on September 20, 2002, which is incorporated herein by reference in its entirety.

The present invention relates to a pickup apparatus for playing back information recorded on an optical disk.

### Description of the Related Art

A pickup apparatus for playing back information recorded on an optical disk such as a CD or a DVD is known. The pickup apparatus is an apparatus for applying a laser beam of a predetermined wavelength to an optical disk through an object lens and receiving the laser beam reflected on the optical disk at a light reception element, thereby reading information written on the optical disk.

The pickup apparatus performs focusing control of controlling the distance between the information record side of the optical disk and the object lens against warpage or runout of the optical disk and also performs tracking control (follow-up control) of the object lens relative to the eccentricity of an information track of the optical disk. Accordingly, the laser beam is applied onto any desired track and the information recorded on the optical disk is read precisely.

An actuator for performing the focusing control and the tracking control has a moving section, which is made up of the object lens, a bobbin for supporting the object lens, a plurality of coils placed on the bobbin, a linear elastic member for holding the bobbin movably, and the like. A proper amount of electric current is allowed to flow into each coil. The object lens is very little displaced together with the bobbin in the focus or tracking direction by the interaction between the electric current flowing through the coil and the magnetic field formed in the proximity of the coil, and the focusing control or the tracking control is performed. Generally, the actuator is optimally designed considering enhancement of sensitivity, a decrease in dynamic tilt of the lens, and suppression of unnecessary resonance.

However, when the coil is energized, the coil generates heat and the heat is transferred through the bobbin to the object lens. The heat transferred to the object lens makes an uneven temperature distribution in the object lens, causing the refractive index of the object lens to be varied from one point to another. Accordingly, the lens characteristic of the whole object lens (particularly, astigmatism aberration) becomes deteriorated and it becomes difficult to precisely read information on the disk. The above problem becomes noticeable particularly when a lens made of a material having physical property value that largely changes by heat (e.g. plastic), is used.

The effect of occurrence of the astigmatism aberration on a detection signal from the optical disk increases as the optical disk becomes a higher density and is turned at higher speed, degrading the detection signal remarkably. Therefore, unevenness of the temperature distribution cannot be ignored to intend to provide higher density and speed of optical disk expected in the future.

The invention was made in view of such a conventional circumference and an object of the invention is to solve a problem of degradation of the lens characteristic of an object lens caused by unevenness of the temperature distribution in the object lens.

In order to achieve the object, according to a first aspect of the invention, there is provided an optical pickup apparatus including: an object lens arranged to be opposed to an optical disk; a bobbin configured to support the object lens; an elastic member configured to support the bobbin in a suspending manner; a fixing section attached to one end of the elastic member; and a pair of coil disposed on the bobbin, wherein each of the coil is disposed at 180 degrees symmetric position with respect to a centroid of a placement face of the object lens in the bobbin, and wherein each of the coil is disposed is disposed in a different plane.

According to a second aspect of the invention, there is provided an optical pickup apparatus including: an object lens arranged to be opposed to an optical disk; a bobbin configured to support the object lens; a first coil and a second coil disposed on a first side surface of the bobbin; and a third coil and a fourth coil disposed on a second side surface, which being opposed to the first side surface, of the bobbin, wherein the first coil and the third coil are disposed at a position being symmetric with respect to an optical axis of the object lens and are electrically connected to each other, and wherein the second coil and the fourth coil are disposed at a position being symmetric with respect to an optical axis of the object lens and are electrically connected to each other.

The above objects and advantages of the present invention will become more apparent by describing in detail preferred exemplary embodiments thereof with reference to the accompanying drawings, wherein:
FIG. 1 is a perspective view to show a pickup apparatus of a first embodiment according to the invention;
FIG. 2 is an enlarged perspective view of an actuator of the pickup apparatus;
FIG. 3 is an exploded perspective view of the actuator of the pickup apparatus;
FIG. 4 is an exploded perspective view of an actuator fixing section and an actuator moving section;
FIG. 5 is a drawing to show the directions of currents flowing into tracking coils and the directions of magnetic fluxes formed by magnets;
FIGS. 6A to 6E are drawings to show the relationship between the actuator moving section and the magnets;
FIGS. 7A and 7B are a top view and a perspective view to show an actuator moving section of a first modification of the first embodiment according to the invention;
FIGS. 8A and 8B are a top view and a perspective view to show an actuator moving section of a second modification of the first embodiment according to the invention;
FIG. 9 is a perspective view to show a pickup apparatus of a second embodiment according to the invention;
FIG. 10 is an exploded perspective view of an actuator fixing section and an actuator moving section;
FIG. 11 is a top view to show a schematic configuration of the actuator moving section;
FIGS. 12A to 12E are drawings to show the relationship between the actuator moving section and the magnets;
FIG. 13 is an exploded perspective view of an actuator fixing section and an actuator moving section of a pickup apparatus of a third embodiment according to the invention; and
FIG. 14 is a top view to show a schematic configuration of the actuator moving section.

Referring now to the accompanying drawings, there are shown preferred embodiments of the invention. First embodiment

Hereinafter, a pickup apparatus 1 of a first embodiment according to the invention will be discussed. An actuator involved in the embodiment includes an object lens opposed to a disk, a fixing section, and a bobbin being suspended by the fixing section and four or more longitudinal elastic members for supporting the object lens. A plurality of coil pairs symmetric with respect to a point (180 degrees), the centroid of the object lens placement face of the bobbin exist and are not placed in the same plane. A detailed description is given below with reference to the accompanying drawings.

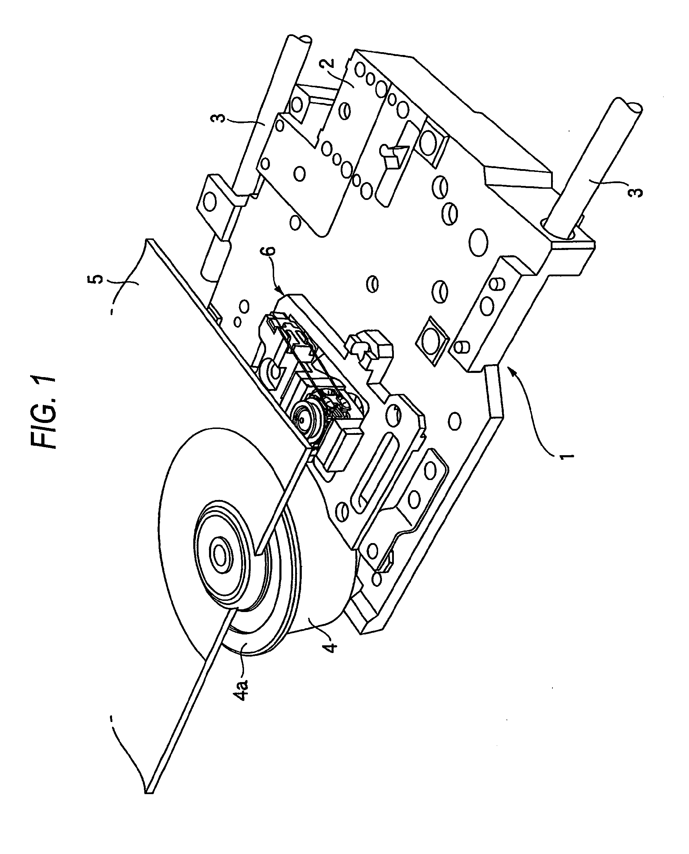

FIG. 1 is a perspective view to show the pickup apparatus 1 of the first embodiment according to the invention. The pickup apparatus 1 is placed in an optical disk unit capable of recording and playing back an optical disk. The pickup apparatus 1 includes a pickup body 2 placed movably on guide shafts 3 and 3 and an actuator 6 placed fixedly on the pickup body 2. The pickup apparatus 1 is opposed to the record side of an optical disk 5 placed on a disk placement section 4a that can be turned through a spindle 4.

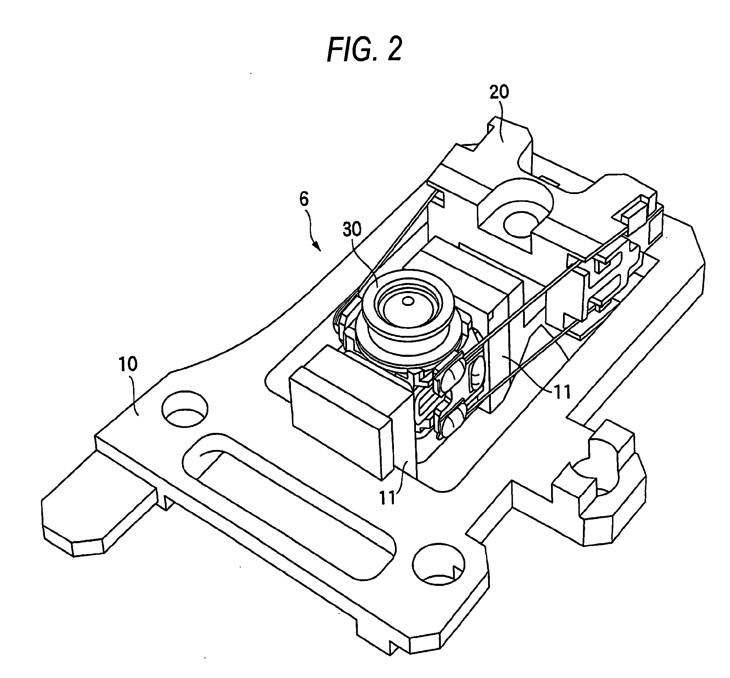

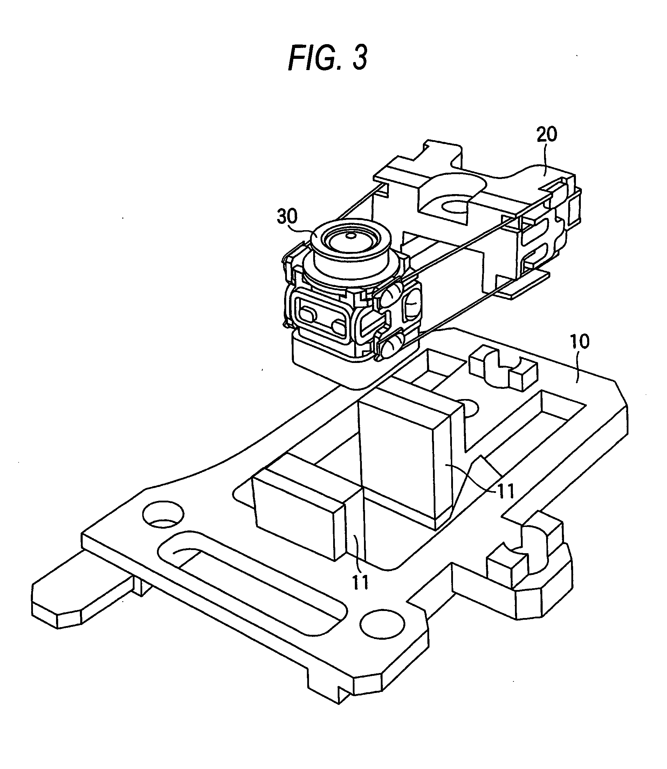

FIG. 2 is an enlarged perspective view of the actuator 6. FIG. 3 is an exploded perspective view of the actuator 6. The actuator 6 has a yoke 10, an actuator fixing section 20 fixedly placed on the yoke 10, and an actuator moving section 30 that can be very little displaced relative to the yoke 10 and the actuator fixing section 20.

A pair of magnet members 11 is opposed to each other on the yoke 10 along the disk circumferential direction so as to sandwich the actuator moving section 30 between the magnet members 11.

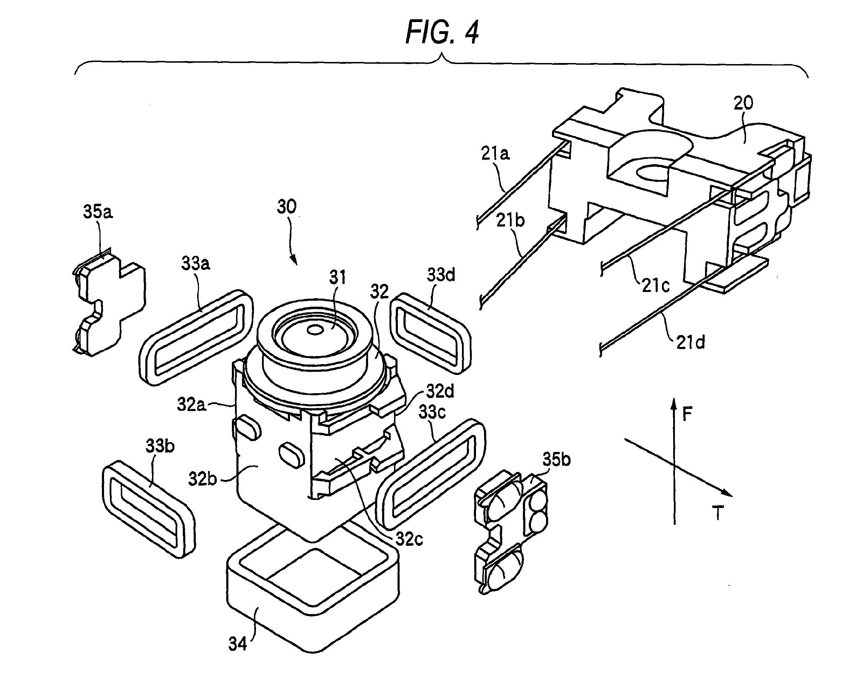

FIG. 4 is an exploded perspective view of the actuator fixing section 20 and the actuator moving section 30 of the actuator. The actuator moving section 30 is connected to the actuator fixing section 20 by four longitudinal elastic members 21a to 21d. The longitudinal elastic members 21a to 21d hold the actuator moving section 30 so as to enable the actuator moving section 30 to be very little displaced in a direction in which the actuator moving section 30 is brought close to the optical disk 5, which will be hereinafter referred to as the focus direction, and in the radial direction of the optical disk 5, which will be hereinafter referred to as the tracking direction. The longitudinal elastic members 21a to 21d are made of conductive material and also function as wiring for supplying power to the actuator moving section 30. End parts of the longitudinal elastic members 21a to 21d on the side of the actuator fixing section 20 are soldered to a wiring pattern formed on the actuator fixing section 20, so that power can be supplied from a drive source through the longitudinal elastic members 21a to 21d to the actuator moving section 30.

The actuator moving section 30 is made up of an object lens 31, a bobbin 32, tracking coils 33a to 33d, a focus coil 34, and covers 35a and 35b. The bobbin 32 is formed of a resin member shaped like a square on the top view and shaped almost like a rectangular parallelepiped as the outside shape and has a hollow body. The bobbin 32 has four sides 32a to 32d. It has the sides 32a and 32c placed almost orthogonally in the radial direction (tracking direction) of the optical disk 5 and the sides 32b and 32d placed almost orthogonally in the circumferential direction of the optical disk 5.

The object lens 31 is bonded and fixed on the top of the bobbin 32 so that the centroid of the top of the bobbin and the optical axis of the object lens match. The object lens 31 has a circular shape on the top view and narrows down light of a predetermined wavelength emitted from a light source (not shown) positioned below the bobbin 32 and applies the light along the track formed on the information record side of the optical disk 5. The object lens 31 allows the light reflected on the information record side of the optical disk 5 to pass through and sends the light to a light reception section having a light reception element (not shown).

The four tracking coils 33a to 33d are placed on the sides 32a to 32d of the bobbin 32. The tracking coils 33a and 33c and the tracking coils 33b and 33d are paired and are symmetric with respect to a point (180 degrees), the centroid of the top face of the bobbin, and are not placed on the same plane. The tracking coils 33a and 33d are connected in series.

In the embodiment, each of the coils are configured to be provided electric power that the temperature and the heat flow rate at the point at which the line connecting an optical axis of the object lens and a center of one of the coils crosses the outer margin of the object lens become equal to those at the point at which the line connecting the optical axis of the object lens and the center of another coil crosses the outer margin of the object lens. In particular, each of the coils are configured in a manner described as follows.

The tracking coils 33a and 33c are wound in the same number of turns so as to become the same DC resistance with the same line diameter. Likewise, the tracking coils 33b and 33d are wound in the same number of turns so as to become the same DC resistance with the same line diameter. The ratio between the resistance value of the tracking coils 33a and 33c and that of the tracking coils 33b and 33d is determined so that the amount of heat flowing into the contact face between the bobbin 32 and one of the coils 33a to 33d becomes the same as that flowing into the contact face between the bobbin 32 and another.

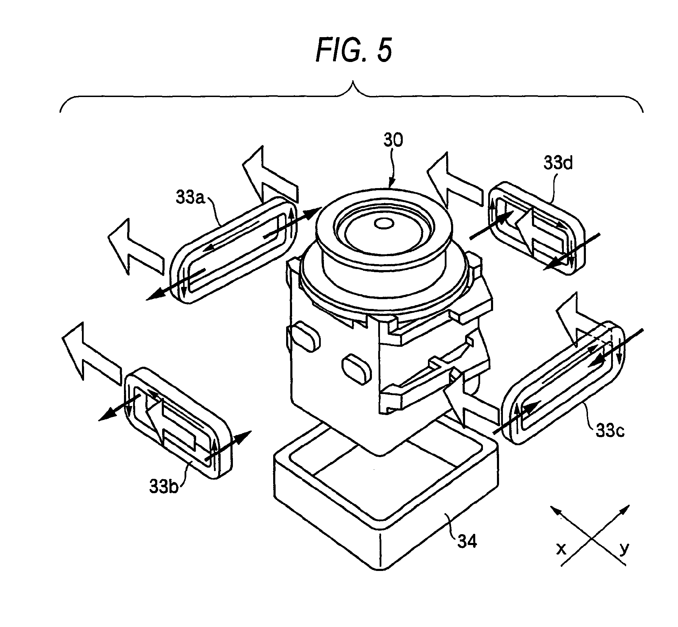

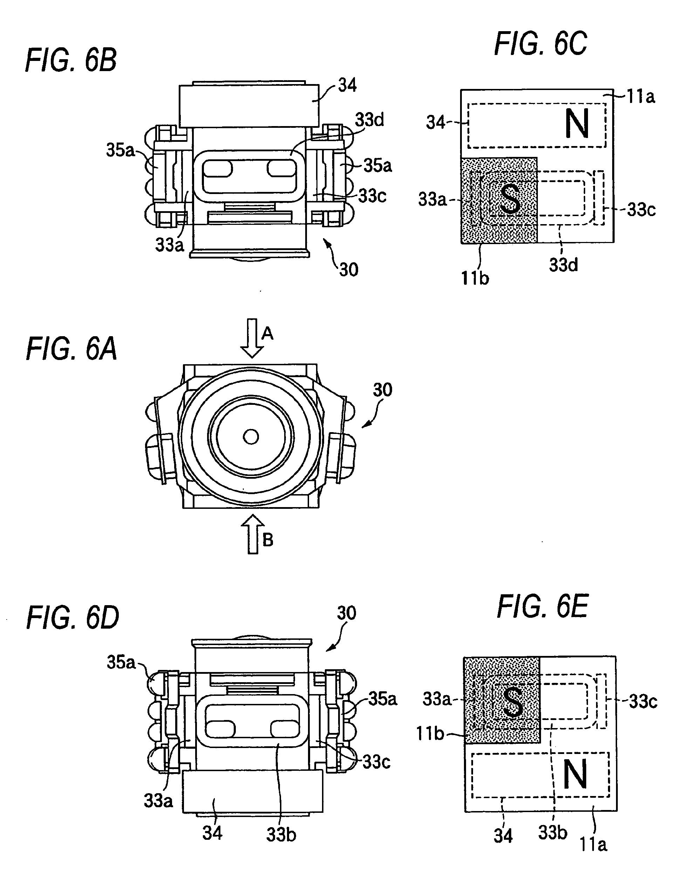

FIG. 5 is a drawing to show the directions of currents flowing into the tracking coils 33 and the directions of magnetic fluxes formed by magnets, and FIGS. 6A to 6E are drawings to show the relationship between the actuator moving section 30 and the magnets. In FIG. 5, thin arrows drawn on the coils along the winding direction of the tracking coils 33a to 33d indicate the directions of currents flowing into the tracking coils 33a to 33d, medium thick arrows parallel with the x direction orthogonal to components parallel with the optical axis direction of the actuator moving section 30 indicate the directions of magnetic fluxes formed by the magnets, and void thick arrows parallel with the y direction indicate the directions of Lorentz force applied to the actuator, namely, the drive direction of the actuator moving section 30 in tracking control.

FIG. 6A is a top view of the actuator moving section 30. FIG. 6B is a side view of the actuator moving section 30 viewed from the direction of arrow A in FIG. 6A. FIG. 6C is a drawing to show a magnetic pole formation pattern of the magnet member 11 opposed to the tracking coil 33d. FIG. 6D is a side view of the actuator moving section 30 viewed from the direction of arrow B in FIG. 6A. FIG. 6E is a drawing to show a magnetic pole formation pattern of the magnet member 11 opposed to the tracking coil 33b. Indication of the magnetic pole of each magnet member is indication of the magnetic pole on the coil vicinal face. Therefore, indication of the N pole means the magnetic pole with the magnetic line of force extending from the front of the drawing plane toward the depth. N pole 11a and S pole 11b of each magnet member 11 are placed as they are separated almost at the center in the length direction of the tracking coils 33b and 33d, so that the flux lines indicated by the medium thick arrows in FIG. 5 cross the tracking coils 33a to 33d.

In tracking control of the actuator moving section 30, when a current flows into each tracking coil 33a to 33d, a drive force is generated by the interaction between the flux line crossing each coil 33a to 33d and the current. As shown in FIG. 5, the current is allowed to flow into each tracking coil 33a to 33d so as to generate the drive force in the same direction for the actuator moving section 30. The actuator moving section 30 is reciprocated in the tracking direction based on the current flowing direction.

One focus coil 34 is wound around the sides 32a to 32d below the tracking coils 33a to 33d. The winding direction of the focus coil 34 is placed so as to become perpendicular to the focus direction. The coil components of the focus coil 34 positioned on the sides 32b and 32d are orthogonal to the magnetic field component formed by the N pole 11a of the magnet member 11. When a current is allowed to flow into the focus coil 34, an interaction occurs between the current flowing through the corresponding coil component and the magnetic field component formed by the N pole 11a of the magnet member 11 and the actuator moving section 30 is reciprocated in the tracking direction in response to the current flowing direction.

In the embodiment, the tracking coils 33a to 33d are connected in serial and thus the same current is allowed to flow into the coils 33a to 33d at the conducting time. Since the ratio between the resistance value of the tracking coils 33a and 33c and that of the tracking coils 33b and 33d is determined so that the amount of heat flowing into the contact face between the bobbin 32 and one of the coils 33a to 33d becomes the same as that flowing into the contact face between the bobbin 32 and another, the amounts of heat flowing in from the coils 33a to 33d become the same and heat is conducted to the object lens 31 almost in the same percentage. Therefore, unevenness of the temperature distribution of the object lens 31 depending on placement of the coils 33a to 33d is suppressed or removed and degradation of the aberration characteristic of the object lens 31 is suppressed.

In the embodiment, the focus coil 34 is wound around the sides 32a to 32d. Therefore, when a current is allowed to flow into the focus coil 34, the amounts of heat occurring on the sides become almost even and unevenness of the temperature distribution of the object lens 31 caused by the focus coil 34 is hard to occur. Thus, degradation of the lens characteristic of the object lens 31 is suppressed.

Therefore, according to the embodiment, when the optical disk has a higher density and is turned at higher-value X speed, it is made possible to stably play back the optical disk without degrading the detection signal.

In the embodiment, only short-piece portions of the tracking coils 33b and 33d of the tracking coils 33a to 33d may interact with the magnetic field. In doing so, it is also possible to perform normal tracking.

In the embodiment, the bobbin is made of a resin material; preferably it is made of a resin having high thermal conductivity. The term "high thermal conductivity" is used to mean such thermal conductivity making the temperature of the object lens support part of the bobbin 32 almost even to such an extent that the same amount of heat is conducted to the object lens 31 independently of the direction, namely, the circumferential temperature distribution of the object lens 31 becomes almost even. Using such a bobbin, unevenness of the temperature distribution of the object lens 31 becomes harder to occur, and degradation of the lens characteristic of the object lens 31 is suppressed effectively.

In the embodiment, the centroid of the object lens placement face of the bobbin 32 and the optical axis of the object lens match, but the invention is not limited to the arrangement in the embodiment. Even when it is arranged that the centroid of the object lens placement face of the bobbin 32 and the optical axis of the object lens match, a similar advantage can be provided by setting a DC resistance ratio such that the amount of heat flowing into the bobbin from the contact face of the coil at the position near to the object lens, of the paired coils matches that of the other.

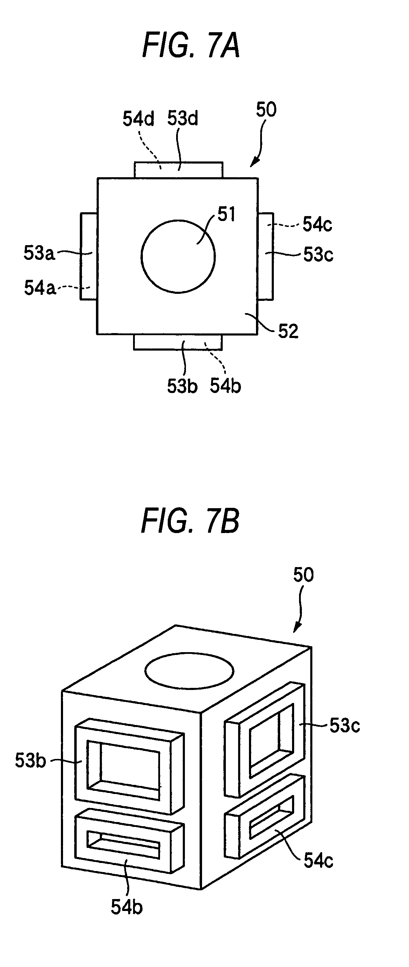

FIGS. 7A and 7B are a top view and a perspective view to show an actuator moving section 50 of a first modification of the first embodiment. The actuator moving section 50 is made up of an object lens 51, a bobbin 52, tracking coils 53a to 53d, and focus coils 54a to 54d.

The actuator moving section 50 of the modification is equivalent to the actuator moving section 30 of the first embodiment wherein the focus coil 34 is replaced with the four focus coils 54a to 54d placed on sides. In the actuator moving section 50, the centroid of the object lens placement face of the bobbin 52 and the optical axis of the object lens 51 match. Thus, the focus coils 54a and 54c are wound in the same number of turns so as to become the same DC resistance with the same line diameter. Likewise, the focus coils 54b and 54d are wound in the same number of turns so as to become the same DC resistance with the same line diameter. The ratio between the resistance value of the focus coils 54a and 54c and that of the focus coils 54b and 54d is determined so that the amount of heat flowing into the contact face between the bobbin and one of the focus coils becomes the same as that flowing into the contact face between the bobbin and another. The focus coils 54a to 54d are connected in series.

In the actuator moving section 50, when focusing control is performed, the same current flows into the four focus coils 54a to 54d; since an equal amount of heat flows into the bobbin 52 from each focus coil 54a to 54d, unevenness of the temperature distribution of the object lens 51 is suppressed. When tracking control is performed, the same current flows into the four tracking coils 53a to 53d; since an equal amount of heat flows into the bobbin 52 from each tracking coil 53a to 53d, unevenness of the temperature distribution of the object lens 51 is suppressed. Thus, in a case where the actuator moving section 50 is used in place of the actuator moving section 30 of the first embodiment, a similar advantage to that of the first embodiment can also be provided.

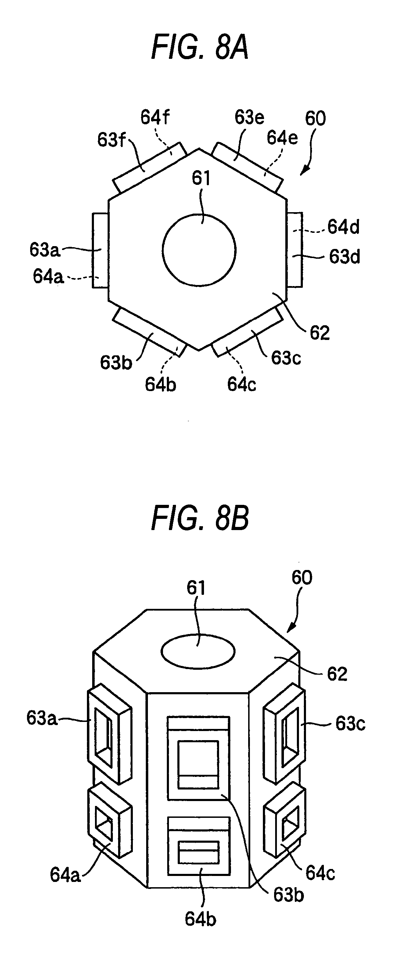

FIGS. 8A and 8B are a top view and a perspective view to show an actuator moving section 60 of a second modification of the first embodiment. The actuator moving section 60 is made up of an object lens 61, a bobbin 62, tracking coils 63a to 63f, and focus coils 64a to 64f.

The bobbin 62 is a member shaped like a hexagonal column having a hexagonal shape on the top view and the object lens 61 is placed on the top of the bobbin 62 . The centroid of the top face of the bobbin 62 and the optical axis of the object lens 61 match to each other. One focus coil and one tracking coil are placed on each side. The tracking coils 63a and 63d, 63b and 63e, and 63c and 63f are paired and are symmetric with respect to a point (180 degrees) , the centroid of the top face of the bobbin, namely, point on the optical axis of the object lens. The coils of each pair are wound in the same number of turns so as to become the same DC resistance with the same line diameter. The resistance value ratio among the tracking coil pairs (63a and 63d, 63b and 63e, and 63c and 63f) is determined so that the amount of heat flowing into the bobbin 62 from the contact face between the bobbin 62 and one of the tracking coils 63a to 63f becomes the same as that from the contact face between the bobbin 62 and another.

Like the tracking coils, the focus coils 64a and 64d, 64b and 64e, and 64c and 64f are paired and are symmetric with respect to a point (180 degrees), the centroid of the top face of the bobbin, namely, point on the optical axis of the object lens. The coils of each pair are wound in the same number of turns so as to become the same DC resistance with the same line diameter. The resistance value ratio among the focus coil pairs (64a and 64d, 64b and 64e, and 64c and 64f) is determined so that the amount of heat flowing into the bobbin 62 from the contact face between the bobbin 62 and one of the focus coils 64a to 64f becomes the same as that from the contact face between the bobbin 62 and another.

In the actuator moving section 60, when focusing control is performed, the same current flows into the six focus coils 64a to 64f; since an equal amount of heat flows into the bobbin 62 from each focus coil 64a to 64f, unevenness of the temperature distribution of the object lens 61 is suppressed. Likewise, when tracking control is performed, the same current flows into the six tracking coils 63a to 63f; since an equal amount of heat flows into the bobbin 62 from each tracking coil 63a to 63f, unevenness of the temperature distribution of the object lens 61 is suppressed. Thus, in a case where the actuator moving section 60 is used in place of the actuator moving section 30 of the first embodiment, a similar advantage to that of the first embodiment can also be provided. Second embodiment

Hereinafter, a pickup apparatus 100 of a second embodiment according to the invention will be discussed. An actuator involved in the pickup apparatus of the embodiment includes an object lens opposed to a disk, a fixing section, and a bobbin being suspended by the fixing section and four or more longitudinal elastic members for supporting the object lens. A plurality of coil pairs symmetric with respect to a point (180 degrees), the centroid of the object lens placement face of the bobbin exist and are not placed in the same plane. Each of the coils generate electric power such that the temperature and the heat flow rate at each point at which the line connecting the optical axis of the object lens and the center of each of the coils crosses the outer margin of the obj ect lens become equal. The bobbin has an even number of sides (four or more) and the coils involve focus coils and tracking coils placed alternately on the sides. While either the focus coils or the tracking coils are energized, a drive current with a predetermined current added is provided to the other. A detailed description is given below with reference to the accompanying drawings.

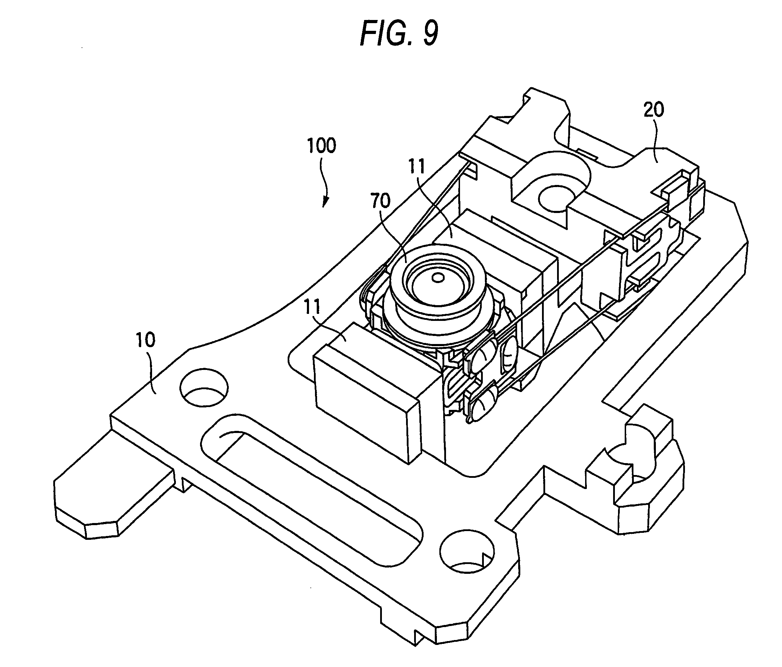

FIG. 9 is a perspective view to show the pickup apparatus 100 of the second embodiment according to the invention. Members identical with those previously described with reference to the accompanying drawings in the first embodiment are denoted by the same reference numerals in FIGS. 9 to 12 and will not be discussed again in detail.

The pickup apparatus 100 has a yoke 10, an actuator fixing section 20 fixedly placed on the yoke 10, and an actuator moving section 70 that can be very little displaced relative to the yoke 10 and the actuator fixing section 20. The actuator fixing section 20 and the actuator moving section 70 make up an actuator of the pickup apparatus 100.

A pair of magnet members 11 is opposed to each other on the yoke 10 along the disk circumferential direction so as to sandwich the actuator moving section 70 between the magnet members 11.

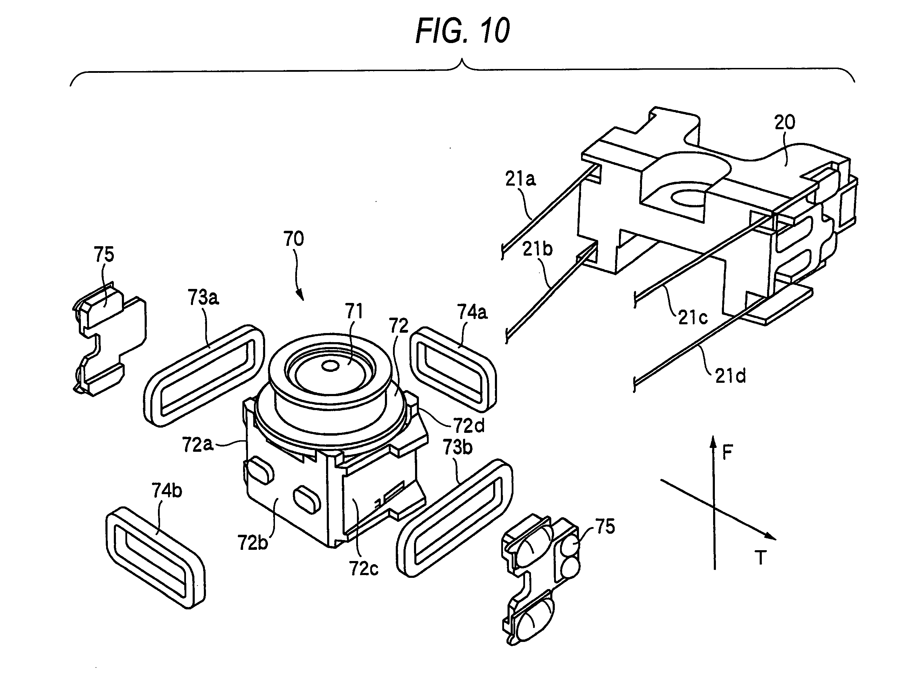

FIG. 10 is an exploded perspective view of the actuator fixing section 20 and the actuator moving section 70 of the actuator. The actuator moving section 70 is connected to the actuator fixing section 20 by four longitudinal elastic members 21a to 21d. The longitudinal elastic members 21a to 21d hold the actuator moving section 70 so as to enable the actuator moving section 70 to be very little displaced in a direction in which the actuator moving section 70 is brought close to an optical disk 5, which will be hereinafter referred to as the focus direction, and in the radial direction of the optical disk 5, which will be hereinafter referred to as the tracking direction. The longitudinal elastic members 21a to 21d are made of conductive material and also function as wiring for supplying power to the actuator moving section 70. End parts of the longitudinal elastic members 21a to 21d on the side of the actuator fixing section 20 are soldered to a wiring pattern formed on the actuator fixing section 20, so that power can be supplied from a drive source through the longitudinal elastic members 21a to 21d to the actuator moving section 70.

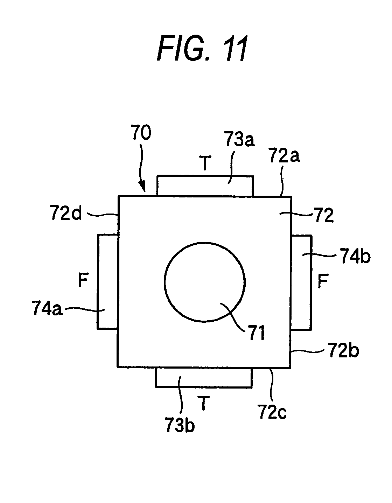

FIG. 11 is a top view to show a schematic configuration of the actuator moving section 70. The actuator moving section 70 is made up of an object lens 71, a bobbin 72, tracking coils 73a and 73b, focus coils 74a and 74b, and covers 75a and 75b.

The bobbin 72 is formed of a resin member shaped like a square on the top view and shaped almost like a rectangular parallelepiped as the outside shape and has a hollow body. The bobbin 72 has four sides 72a to 72d. The sides 72a and 72c are placed almost orthogonally to the radial direction (tracking direction) of the optical disk 5 and the sides 72b and 72d are placed almost orthogonally to the circumferential direction of the optical disk 5.

The object lens 71 is bonded and fixed on the top of the bobbin 72 so that the centroid of the top of the bobbin and the optical axis of the object lens match. The object lens 71 has a circular shape on the top view and narrows down light of a predetermined wavelength emitted from a light source (not shown) positioned below the bobbin 72 and applies the light along the track formed on the information record side of the optical disk 5. The object lens 71 allows the light reflected on the information record side of the optical disk 5 to pass through and sends the light to a light reception section having a light reception element (not shown).

The tracking coils 73a and 73b are placed on the sides 72a and 72c of the bobbin 72. The focus coils 74a and 74b are placed on the sides 72b and 72d of the bobbin 72. That is, the coils for contributing to a move of the actuator moving section 70 in different conditions are placed on the contiguous sides of the bobbin 72. The tracking coils 73a and 73b and the focus coils 74a and 74b are paired and are symmetric with respect to a point (180 degrees), the centroid of the top face of the bobbin 72. The tracking coils 73a and 73b and the focus coils 74a and 74b are connected in series.

The tracking coils 73a and 73b are wound in the same number of turns so as to become the same DC resistance with the same line diameter. Likewise, the focus coils 74a and 74b are wound in the same number of turns so as to become the same DC resistance with the same line diameter. The ratio between the resistance value of the tracking coils 73a and 73b and that of the focus coils 74a and 74b is determined so that the amount of heat flowing into the contact face between the bobbin 72 and one of the coils 73a, 73b, 74a, and 74b becomes the same as that flowing into the contact face between the bobbin 72 and another.

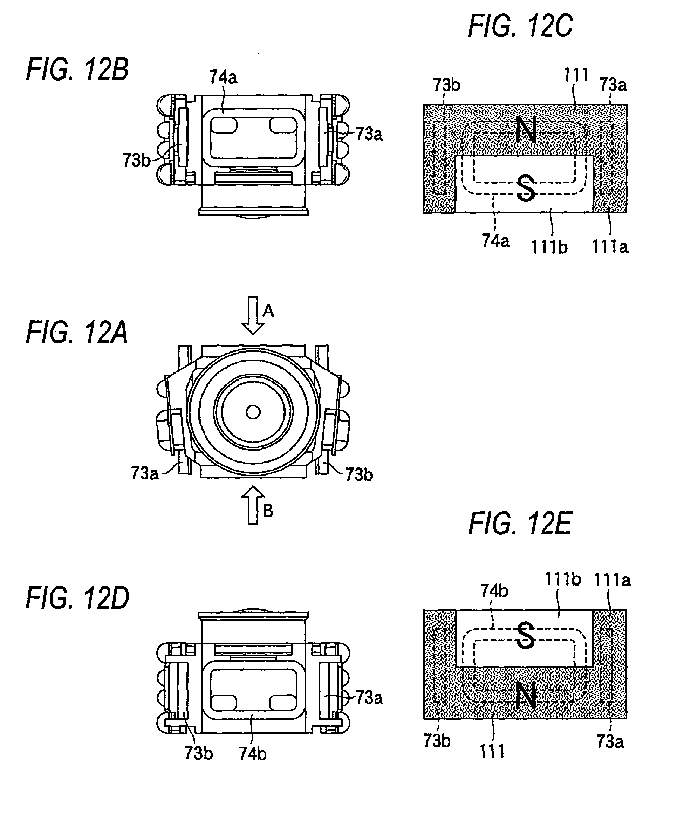

FIG. 12A is a top view of the actuator moving section 70. FIG. 12B is a side view of the actuator moving section 70 viewed from the direction of arrow A in FIG. 12A. FIG. 12C is a drawing to show a magnetic pole formation pattern of a magnet member 111 opposed to the focus coil 74a. FIG. 12D is a side view of the actuator moving section 70 viewed from the direction of arrow B in FIG. 12A. FIG. 12E is a drawing to show a magnetic pole formation pattern of the magnet member 111 opposed to the focus coil 74b. Indication of the magnetic pole in FIGS. 12C and 12E is indication of the magnetic pole on the coil vicinal face of the magnet member 111 . Each magnet member 111 is placed so that an N pole 111a is opposed to the short-piece portion of the tracking coil 73a, 73b and two circumferential components of each focus coil 74a, 74b are opposed to different magnetic poles.

In the short-piece portion of the tracking coil 73a, 73b, the coil wire is placed in the direction orthogonal to the magnetic field component formed by the magnet member 111. When a current is allowed to flow into the tracking coils 73a and 73b, a drive force is generated by the interaction between the current flowing through the short-piece portion of each coil and the magnetic field component formed by the magnet member 111. The current is allowed to flow into each tracking coil 73a, 73b so as to generate the drive force in the same direction for the actuator moving section 70. The actuator moving section 70 is reciprocated in the tracking direction based on the current flowing direction.

In the long-piece portion of the focus coil 74a, 74b, the coil wire is placed in the direction orthogonal to the magnetic field component formed by the magnet member 111. When a current is allowed to flow into the focus coils 74a and 74b, a drive force is generated by the interaction between the current flowing through the long-piece portion of each coil and the magnetic field component formed by the magnet member 111. The current is allowed to flow into each focus coil 74a, 74b so as to generate the drive force in the same direction for the actuator moving section 70. The actuator moving section 70 is reciprocated in the focus direction based on the current flowing direction.

In the embodiment, the tracking coils 73a and 73b are connected in serial and thus the same current is allowed to flow into the coils 73a and 73b at the conducting time. Since the focus coils 74a and 74b are connected in serial, the same current flows into the coils 74a and 74b at the conducting time.

Generally, it is impossible that only either of the face swing amount of the optical disk 5 corresponding to the focus control amount and the track eccentric amount corresponding to the tracking control amount is zero. Therefore, to perform normal focus control and tracking control, some control current flows into the tracking coils 73a and 73b and the focus coils 74a and 74b. Therefore, according to the configuration of the apparatus of the embodiment, unevenness of the temperature distribution of the object lens is suppressed as compared with the case where the configuration of the apparatus of the embodiment is not adopted.

Unevenness of the temperature distribution of the object lens can be suppressed more aggressively by adopting the following configuration: The focus control current and the tracking control current for most suppressing unevenness of the temperature distribution of the object lens are determined by the square root ratio of the inverse ratio of the resistance values of the coils to make the same the amounts of heat from the coils flowing into the bobbin. Thus, an added current may be applied to the insufficient side so that the ratio between the focus control current and the tracking control current becomes constant. However, with a simple DC value, the actuator moving section would be displaced unnecessarily. Thus, an added current of amplitude and frequency sufficiently higher than the servo cutoff frequency in the range in which the actuator operation is not suppressed by servo and the detection signal from the optical disk is not degraded may be input to the coil and may be converted into only heat rather than drive force on the coil. Using this technique, unevenness of the temperature distribution in the object lens is suppressed and aberration degradation of the object lens is suppressed.

In the embodiment, the bobbin is made of a resin material; preferably it is made of a resin having high thermal conductivity. The term "high thermal conductivity" is used to mean such thermal conductivity making the temperature of the object lens support part of the bobbin 72 almost even to such an extent that the same amount of heat is conducted to the object lens 71 independently of the direction, namely, the circumferential temperature distribution of the object lens 71 becomes almost even. Using such a bobbin, evenness of the temperature distribution of the object lens 71 is promoted, and degradation of the lens characteristic of the object lens 71 is suppressed effectively.

In the embodiment, the bobbin 72 is shaped roughly like a rectangular parallelepiped shaped like a square on the top view and the focus coils and the tracking coils are placed alternately on the sides, but the invention is not limited to it. The bobbin may have an even number of sides (four or more) and a plurality of coils may involve focus coils and tracking coils placed alternately on the sides. Also in this case, a similar advantage to that of the embodiment can be provided.

More preferably, the shape of the bobbin is a polygonal column or a circular cylinder and the coils are spaced from each other at equal angle in the surroundings of the centroid of the placement face or the optical axis; however, the invention is not limited to it.

### Third embodiment

Hereinafter, a pickup apparatus of a third embodiment according to the invention will be discussed. An actuator involved in the pickup apparatus of the embodiment includes an object lens being opposed to a disk, a bobbin having a first side and a second side opposed to the first side for supporting the object lens, a first coil and a second coil being placed on the first side, and a third coil and a fourth coil being placed on the second side. The first coil and the third coil are placed at symmetric positions with respect to a point with a point on the optical axis of the object lens as the center and are electrically connected to each other. The second coil and the fourth coil are placed at symmetric positions with respect to a point with a point on the optical axis as the center and are electrically connected to each other. A detailed description is given below with reference to the accompanying drawings.

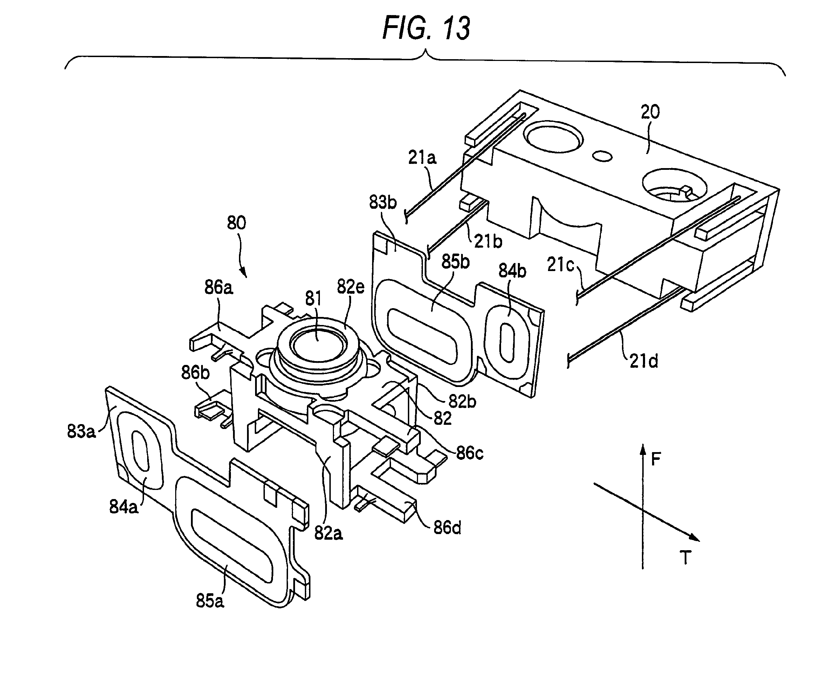

FIG. 13 is an exploded perspective view of an actuator fixing section 20 and an actuator moving section 80 of the pickup apparatus of the third embodiment according to the invention. Members identical with those previously described with reference to the accompanying drawings in the first and second embodiments are denoted by the same reference numerals in FIG. 13 and will not be discussed again in detail.

The actuator fixing section 20 and the actuator moving section 80 are connected by four longitudinal elastic members 21a to 21d. The longitudinal elastic members 21a to 21d hold the actuator moving section 80 so as to enable the actuator moving section 80 to be very little displaced in a direction in which the actuator moving section 80 is brought close to an optical disk 5, which will be hereinafter referred to as the focus direction, and in the radial direction of the optical disk 5, which will be hereinafter referred to as the tracking direction. The longitudinal elastic members 21a to 21d are made of conductive material and also function as wiring for supplying power to the actuator moving section 80. End parts of the longitudinal elastic members 21a to 21d on the side of the actuator fixing section 20 are soldered to a wiring pattern formed on the actuator fixing section 20, so that power can be supplied from a drive source through the longitudinal elastic members 21a to 21d to the actuator moving section 80.

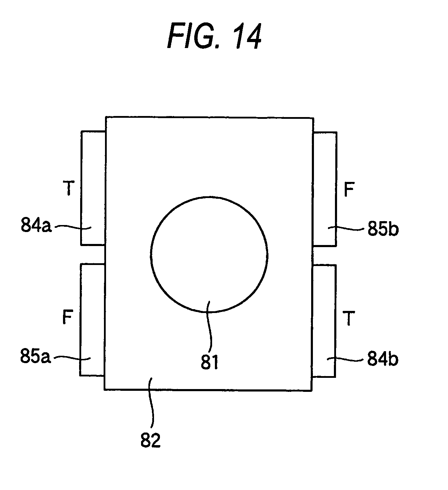

FIG. 14 is a top view to show a schematic configuration of the actuator moving section 80. The actuator moving section 80 is made up of an object lens 81, a bobbin 82, and printed wiring boards 83a and 83b. The bobbin 82 is formed of a resin member shaped like a rectangle on the top view and has a hollow body. The bobbin 82 has two sides 82a and 82b placed almost orthogonally in the circumferential direction of the optical disk 5.

The object lens 81 is bonded and fixed on the top of the bobbin 82 so that the centroid of the top of the bobbin and the optical axis of the object lens match. The object lens 81 has a circular shape on the top view and narrows down light of a predetermined wavelength emitted from a light source (not shown) positioned below the bobbin 82 and applies the light along the track formed on the information record side of the optical disk 5. The object lens 81 receives the light reflected on the information record side of the optical disk 5 and sends the light to a light reception section having a light reception element (not shown).

Fixing parts 86a to 86d for fixing the end parts of the longitudinal elastic members 21a to 21d are projected on the radial side of the disk 5 of the bobbin 82. The bobbin 82 is supported in the fixing parts 86a to 86d very little displaceably by the longitudinal elastic members 21a to 21d.

The printed wiring boards 83a and 83b are opposed to each other on the sides 82a and 82b of the bobbin 82. The printed wiring board 83a is formed with a tracking coil 84a and a focus coil 85a arranged in the length direction, and the printed wiring board 83b is formed with a tracking coil 84b and a focus coil 85b arranged in the length direction. The tracking coil 84a of the printed wiring board 83a is opposed to the focus coil 85b of the printed wiring board 83b, and the focus coil 85a of the printed wiring board 83a is opposed to the tracking coil 84b of the printed wiring board 83b. The tracking coils 84a and 84b and the focus coils 85a and 85b are placed at symmetric positions with respect to a point with a point on the optical axis of the object lens 81 as the center.

The tracking coils 84a and 84b and the focus coils 85a and 85b are wound in the same number of turns so as to become the same DC resistance with the same line diameter. The tracking coils 84a and 84b are wound almost like an elliptical and are placed so that the major axis direction becomes almost parallel with the focus direction. The focus coils 85a and 85b are wound almost like an elliptical and are placed so that the major axis direction becomes almost parallel with the tracking direction.

In the major axis direction portion of the tracking coil 84a, 84b, the coil wire is placed in the direction orthogonal to the magnetic flux component formed by a magnet member 111. When a current is provided into the tracking coils 84a and 84b, a drive force is generated by the interaction between the current flowing through the major axis direction portion of each coil and the magnetic flux component formed by the magnet member 111, and the actuator moving section 80 is reciprocated in the tracking direction in response to the current flowing direction.

In the major axis direction portion of the focus coil 85a, 85b, the coil wire is placed in the direction orthogonal to the magnetic field component formed by the magnet member 111. When a current is provided into the focus coils 85a and 85b, a drive force is generated by the interaction between the current flowing through the major axis direction portion of each coil and the magnetic field component formed by the magnet member 111, and the actuator moving section 80 is reciprocated in the focus direction in response to the current flowing direction.

Generally, it is impossible that only either of the face swing amount of the optical disk 5 corresponding to the focus control amount and the track eccentric amount corresponding to the tracking control amount is zero. Therefore, to perform normal focus control and tracking control in the embodiment, some control current flows into the tracking coils 84a and 84b and the focus coils 85a and 85b. Therefore, by placing the tracking coils 84a and 84b and the focus coils 85a and 85b at symmetric positions with respect to a point with a point on the optical axis of the object lens 81 as the center as in the configuration of the apparatus of the embodiment, unevenness of the temperature distribution of the object lens is suppressed as compared with the case where the configuration of the apparatus of the embodiment is not adopted.

Unevenness of the temperature distribution of the object lens can be suppressed more aggressively by adopting the following configuration: The focus control current and the tracking control current for most suppressing unevenness of the temperature distribution of the object lens are determined by the square root ratio of the inverse ratio of the resistance values of the coils to make the same the amounts of heat from the coils flowing into the bobbin. Thus, an added current may be applied to the insufficient side so that the ratio between the focus control current and the tracking control current becomes constant. However, with a simple DC value, the actuator moving section would be displaced unnecessarily. Thus, an added current of amplitude and frequency sufficiently higher than the servo cutoff frequency in the range in which the actuator operation is not suppressed by servo and the detection signal from the optical disk is not degraded may be input to the coil and may be converted into only heat rather than drive force on the coil. Using this technique, unevenness of the temperature distribution in the object lens is suppressed and aberration degradation of the object lens is suppressed.

Therefore, according to the third embodiment, when the optical disk has a higher density and is turned at higher-value X speed, it is made possible to stably play back the optical disk without degrading the detection signal.

In the embodiment, the bobbin is made of a resin material. The bobbin is preferably be made of a resin having high thermal conductivity. The term "high thermal conductivity" is used to mean such thermal conductivity making the temperature of the object lens support part of the bobbin 82 almost even to such an extent that the same amount of heat is conducted to the object lens 81 independently of the direction, namely, the circumferential temperature distribution of the object lens 81 becomes almost even. Using such a bobbin, unevenness of the temperature distribution of the object lens 81 becomes harder to occur, and degradation of the lens characteristic of the object lens 81 is suppressed effectively.

In the embodiment, two coils are placed on each of the printed wiring boards 83a and 83b, but the invention is not limited to the configuration. Three or more coils may be placed on each printed wiring board.

Although the present invention has been shown and described with reference to specific preferred embodiments, various changes and modifications will be apparent to those skilled in the art from the teachings herein. Such changes and modifications as are obvious are deemed to come within the spirit, scope and contemplation of the invention as defined in the appended claims.

## Claims

1. An optical pickup apparatus comprising:
an object lens arranged to be opposed to an optical disk;
a bobbin configured to support the object lens;
an elastic member configured to support the bobbin in a suspending manner;
a fixing section attached to one end of the elastic member; and
a pair of coil disposed on the bobbin,
wherein each of the coil is disposed at 180 degrees symmetric position with respect to a centroid of a placement face of the object lens in the bobbin, and
wherein each of the coil is disposed is disposed in a different plane.

2. The optical pickup apparatus as claimed in claim 1, wherein the elastic member comprises four or more longitudinal elastic members.

3. The optical pickup apparatus as claimed in claim 1, wherein the pair of coil comprises a plurality of pairs of coil.

4. The optical pickup apparatus as claimed in claim 1, wherein electric power such that the temperature and the heat flow rate at the point at which the line connecting an optical axis of the object lens and a center of one of the coils crosses the outer margin of the object lens become equal to those at the point at which the line connecting the optical axis of the object lens and the center of another coil crosses the outer margin of the object lens, is provided to each of the coils.

5. The optical pickup apparatus as claimed in claim 1, wherein a symmetrical axis of the pair of coil matches an optical axis of the object lens.

6. The optical pickup apparatus as claimed in claim 1, wherein each of the coils of the pair are spaced from each other at the same distance with respect to an optical axis of the object lens.

7. The optical pickup apparatus as claimed in claim 1, wherein the pair of coil comprises either a pair of focus coil or a pair of tracking coil.

8. The optical pickup apparatus as claimed in claim 1, wherein each of the coils of the pair are connected in series.

9. The optical pickup apparatus as claimed in claim 3, wherein the bobbin comprises four or more even numbers of side surfaces,
wherein the plurality of pairs of coil comprises either a pair of focus coil or a pair of tracking coil, and
wherein the plurality of pairs of coil are arranged in a manner that each of the focus coil and the tracking coil are disposed alternately on each of the side surfaces.

10. The optical pickup apparatus as claimed in claim 9, wherein a first drive current is provided to either of the focus coils and the tracking coils, and a second drive current is provided to the other of the focus coils and the tracking coils, and
wherein during the first drive current is provided, a predetermined current is added to the second drive current.

11. An optical pickup apparatus comprising:
an object lens arranged to be opposed to an optical disk;
a bobbin configured to support the object lens;
a first coil and a second coil disposed on a first side surface of the bobbin; and
a third coil and a fourth coil disposed on a second side surface, which being opposed to the first side surface, of the bobbin,
wherein the first coil and the third coil are disposed at a position being symmetric with respect to an optical axis of the object lens and are electrically connected to each other, and
wherein the second coil and the fourth coil are disposed at a position being symmetric with respect to an optical axis of the object lens and are electrically connected to each other.

12. The optical pickup apparatus as claimed in claim 11, wherein the first coil and the third coil each comprises either of a focus coil or a tracking coil, and
wherein the second coil and the fourth coil each comprises the other of the focus coil or the tracking coil.

13. The optical pickup apparatus as claimed in claim 12, wherein a first drive current is provided to either of the focus coils and the tracking coils, and a second drive current is provided to the other of the focus coils and the tracking coils, and
wherein during the first drive current is provided, a predetermined current is added to the second drive current.

14. The optical pickup apparatus as claimed in claim 11, further comprising:
an elastic member configured to support the bobbin in a suspending manner; and
a fixing section attached to one end of the elastic member.
